Europäisches Patentamt

European Patent Office

Office européen des brevets

(19)

(11) Numéro de publication: **0 518 301 A2**

## DEMANDE DE BREVET EUROPEEN

(12)

(21) Numéro de dépôt: **92109773.9**

(22) Date de dépôt: **10.06.92**

(51) Int. Cl.5: **B65D 83/14**, G05D 7/01

(30) Priorité: **13.06.91 CH 1767/91**

(43) Date de publication de la demande:
**16.12.92 Bulletin 92/51**

(84) Etats contractants désignés:
**BE CH DE ES FR GB IT LI NL**

(71) Demandeur: **EP SPRAY SYSTEM S.A.**
**30, Rue du Plan**
**CH-2002 Neuchatel(CH)**

(72) Inventeur: **Lebet, Jean-Philippe**
**Route de Coffrane 22**
**CH-2206 Les Geneveys-sur-Coffrane(CH)**

(74) Mandataire: **Robert, Jean S.**
**51, route du Prieur**
**CH-1257 Landecy (Genève)(CH)**

(54) **Tête de pulvérisation.**

(57) Le flux de liquide à pulvériser rencontre, avant de parvenir à la buse de pulvérisation (6), une pièce cylindrique (11) en matière élastiquement compressible percée d'un trou central (12). La section de ce trou varie en fonction de la pression exercée par le gaz propulseur sur la face postérieure de cette pièce cylindrique (11). Il en résulte qu'en début d'utilisation du pulvérisateur, lorsque la pression du gaz propulseur est maximum, la section du passage (12) est la plus faible alors que, vers la fin de l'utilisation de l'appareil, lorsque la pression du gaz est la plus faible, ce passage présente sa section maximum. Cette disposition produit une auto-régulation du débit du liquide qui, par conséquent, ne varie pas de façon appréciable tout au cours de la période d'utilisation de l'appareil.

FIG. 1

La présente invention a pour objet une tête de pulvérisation d'un liquide soumis à la pression d'un gaz propulseur.

La technique des aérosols évolue sous la pression à la fois des tendances du marché et de réglements visant à la sauvegarde de l'environnement. C'est ainsi que les aérosols faisant usage de CFC (gaz liquifié) comme gaz propulseur sont actuellement mis à l'index.

L'un des problèmes que pose la pulvérisation d'un liquide à l'aide d'un gaz propulseur comprimé, et qui ne se présente pas dans le cas des aérosols à gaz liquide, réside dans le fait que la pression du gaz propulseur varie, dans le sens d'une diminution, au fur et à mesure de l'emploi de l'appareil de pulvérisation et que, de ce fait, le débit du liquide n'est pas constant.

Différents systèmes de régulation du débit de liquide ont déjà été proposés, basés, pour la plupart, sur le réglage de la pression de propulsion et, plus rarement, sur le réglage de la section de passage du liquide.

Aucune des solutions proposées ne donne entièrement satisfaction, sans parler du fait que leur coût est généralement rédhibitoire.

Le but de la présente invention est de fournir un moyen de réglage du débit d'un liquide pulvérisé par un gaz propulseur comprimé qui ne soit pas ou peu sensible aux variations de la pression dudit gaz.

Ce but est atteint grâce aux moyens définis dans la revendication 1.

Le dessin représente, à titre d'exemple, une forme d'exécution de l'objet de l'invention et des variantes.

La fig. 1 est une coupe, passant par l'axe de la buse de pulvérisation, d'une tête de pulvérisation d'un liquide soumis à la pression d'un gaz propulseur comprimé.

La fig. 2 est une vue en perspective agrandie, éclatée, d'un détail du dispositif de pulvérisation selon une première forme d'exécution de l'objet de l'invention.

La fig. 3 est une coupe axiale d'une variante.

Les fig. 4 à 6 sont des vues en perspective de trois variantes de l'objet de l'invention.

La fig. 7 est une coupe axiale d'une autre variante.

La fig. 8 est une vue en perspective, éclatée, d'une autre variante.

La fig. 9 est une coupe axiale d'une autre variante encore.

La fig. 10 est une vue en perspective, éclatée, d'une autre variante.

La fig. 11 est une vue en perspective d'une variante.

Les fig. 12 à 14 sont trois coupes axiales d'un détail d'une variante représentée dans trois états différents, et

La fig. 15 est une coupe axiale d'une dernière variante.

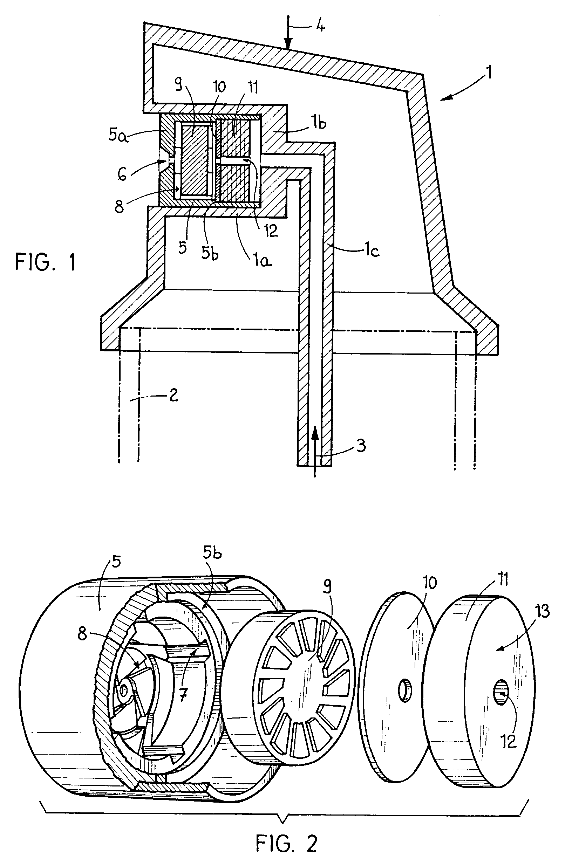

Dans la forme d'exécution représentée aux fig. 1 et 2, la tête de pulvérisation comprend un corps creux 1, en matière plastique, destiné à s'engager sur un embout tubulaire 2 que présente le récipient, non représenté, contenant le liquide à pulvériser et le gaz propulseur sous pression.

Ce corps creux 1 présente une partie tubulaire 1a, ouvrant sur l'extérieur, munie d'un fond, désigné par 1b, portant un tube 1c à travers lequel s'écoule, dans le sens de la flèche 3, le liquide à propulser lorsqu'une pression est exercée, comme indiqué en 4, sur la face supérieure de ce corps.

Le mécanisme à soupape ouvrant et fermant l'accès du liquide dans le tube 1c n'a pas été représenté, étant étranger à l'invention.

Le dispositif de pulvérisation proprement dit est logé dans la partie tubulaire 1a. Il comprend une douille 5, engagée dans la paroi 1a, dont le fond 5a est percé d'un trou central 6 constituant la buse de pulvérisation. La paroi latérale de cette douille 5 présente (fig. 2) des gorges intérieures longitudinales 7 communiquant avec des gorges 8 ménagées dans son fond 5a, ouvrant sur le trou central 6, les gorges 7 et 8 formant, avec une pièce cylindrique 9, dite noyau, située à l'intérieur de la douille 5, des passages pour le liquide sous pression.

Ce dispositif de pulvérisation ne sera pas décrit ici plus en détail, étant connu en soi. Il est d'ailleurs décrit et représenté dans le brevet suisse No 646.619.

La paroi de la douille 5 présente, en 5b, un épaulement intérieur contre lequel prend appui une rondelle rigide 10, en métal ou en matière plastique, contre laquelle est appliquée une pièce cylindrique 11 en matière élastiquement compressible, par exemple du caoutchouc. La pièce 11, logée dans la partie terminale de la douille 5, est percée d'un trou central 12 dont la section varie en fonction de la pression exercée sur la face postérieure, désignée par 13 (fig. 2), de la pièce.

Il résulte de cet agencement que, au début de l'utilisation de l'appareil de pulvérisation équipé de la présente tête, lorsque la pression du gaz propulseur est la plus forte, la pièce cylindrique 11 en matière élastiquement compressible est comprimée, ce qui resserre son trou central 12 qui ne présente alors qu'une faible section et limite ainsi le passage du liquide. Lorsque la pression du gaz propulseur baisse, au fur et à mesure de l'emploi de l'appareil, les limites de pression allant de 8 à 9 bars,initialement, jusqu'à 3 à 3,5 bars à la fin, la pièce cylindrique 11 est de moins en moins comprimée et reprend, par son élasticité propre, sa forme initiale, son trou central 12 se dilatant de plus en plus. Ainsi, la diminution de pression est compensée par une augmentation de la section de passage du liquide et le débit de ce dernier est sensiblement constant pendant toute la durée d'utilisation de l'appareil.

Il est à remarquer que ce dispositif d'autoréglage du débit est simple et bon marché, qu'il est très peu encombrant et peut sans difficulté se loger dans une tête de pulvérisation standard, sans modification de celle-ci et sans modification de la buse de pulvérisation.

En variante, on pourra prévoir qu'une rondelle élastique mince, compressible élastiquement, soit appliquée sur la face postérieure 13 de la pièce 11 de réglage du débit.

En variante également, la pièce 11 pourra être réalisée d'une pièce avec le noyau 9.

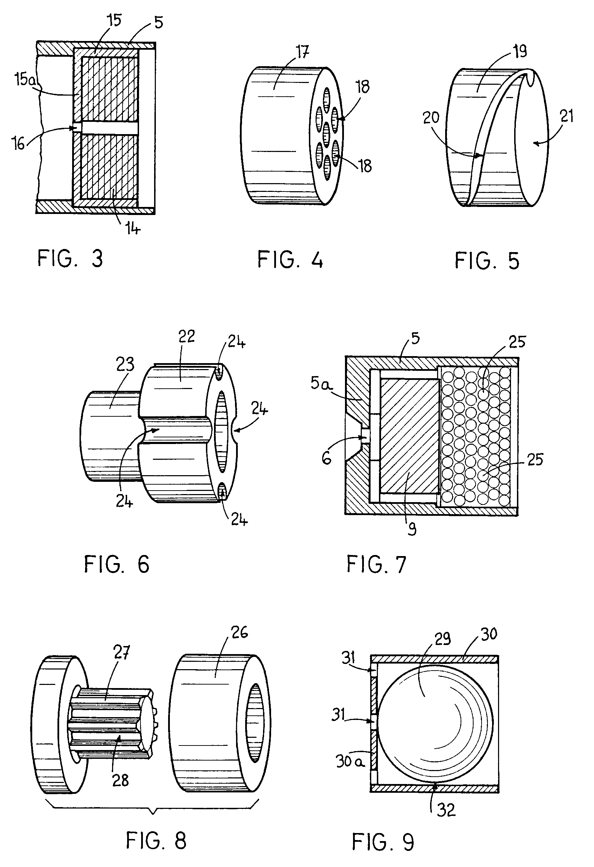

La variante de la fig. 3 diffère de la première forme d'exécution par le fait que la pièce cylindrique élastiquement compressible, désignée par 14, identique à la pièce 11 de la première forme d'exécution, est engagée dans une monture 15, en forme de douille, dont le fond, désigné par 15a, est percé d'un trou central 16. Cette monture 15 s'engage elle-même dans la douille 5 formant la buse de pulvérisation.

Quant à la variante de la fig. 4, elle diffère de la première forme d'exécution par le fait que la pièce cylindrique en matière élastiquement compressible, désignée par 17, n'est pas percée d'un seul trou central comme c'est le cas de la pièce 11 de la première forme d'exécution, mais d'un ensemble de trous longitudinaux 18, parallèles à son axe. Quant au reste, le fonctionnement est le même que dans la première forme d'exécution.

Dans la variante de la fig. 5, la pièce cylindrique en matière élastiquement compressible, désignée par 19, présente sur sa face latérale cylindrique une gorge hélicoïdale 20 débouchant sur les deux faces axiales de ladite pièce. Cette gorge 20 forme, avec la monture tubulaire dans laquelle la pièce 19 est engagée, par exemple une douille analogue à la douille 5 de la première forme d'exécution, un canal que parcourt le liquide à pulvériser et dont la section varie en fonction de la pression exercée sur la face postérieure, désignée par 21, de la pièce 19.

Dans la variante de la fig. 6, la pièce cylindrique en matière élastiquement compressible, désignée par 22, est de forme annulaire et est engagée sur un noyau 23 correspondant au noyau 9 de la première forme d'exécution, mais qui est plus long que ce dernier. La pièce 22 présente, à sa périphérie, des gorges longitudinales 24 qui forment, avec la monture tubulaire, des canaux de section variant avec la pression exercée sur ladite pièce.

Dans la variante de la fig. 7, dans laquelle les éléments identiques à ceux de la première forme d'exécution, à savoir la douille 5-5a ménageant la buse 6 et le noyau 9, ont été désignés par les mêmes chiffres de référence qu'aux fig. 1 et 2, le dispositif régulateur du débit est constitué par un ensemble de sphères 25, en matière élastiquement compressible, disposées en vrac dans la douille 5, à l'arrière du noyau 9. Ces sphères ménagent entre elles des interstices dont la section varie en fonction de la pression exercée sur elles par le gaz propulseur.

En variante, les sphères 25 pourraient être remplacées par des corps de forme irrégulière.

La variante de la fig. 8 rappelle celle de la fig. 6, à la différence que la pièce en matière élastiquement compressible, désignée par 26, ne présente pas de gorges longitudinales à sa périphérie et que le noyau, désigné par 27, présente, sur sa partie engagée dans ladite pièce, de telles gorges, désignées par 28.

Dans la variante de la fig. 9, l'élément en matière élastiquement compressible, désigné par 29, a la forme d'une sphère et est logé, avec jeu, dans une douille 30 dont le fond, désigné par 30a. est percé de trous 31. Le liquide à pulvériser passe entre la paroi de la douille 30 et la sphère 29, l'espace annulaire libre entre ces deux éléments, indiqué en 32, variant en fonction de la pression que le gaz propulseur exerce sur la sphère.

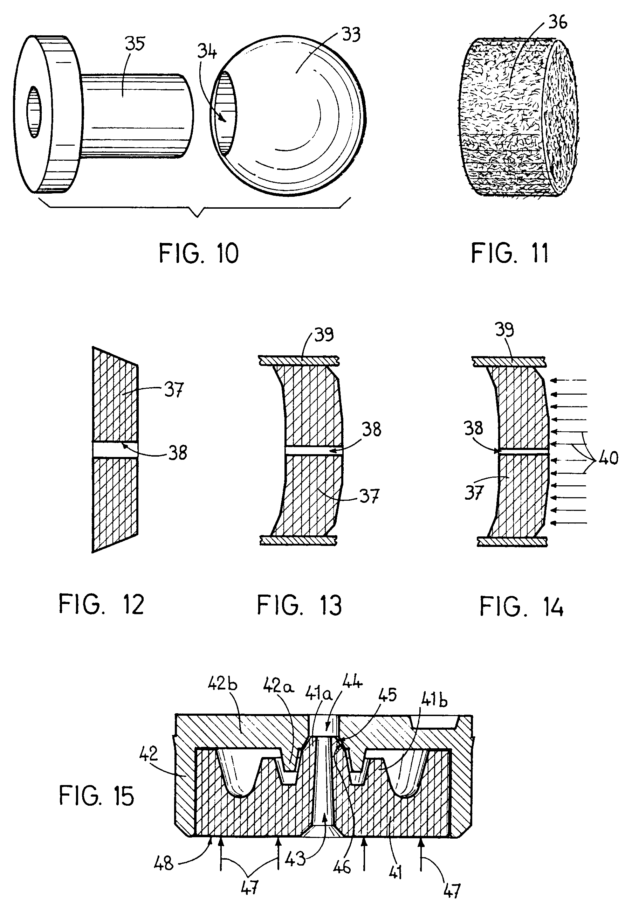

Dans la variante de la fig. 10, l'élément en matière élastiquement compressible, désigné par 33, est également une sphère. Cette sphère est percée d'un trou diamétral 34 dans lequel s'engage le noyau, désigné par 35, du dispositif de pulvérisation. L'espace annulaire libre entre ce noyau et la paroi du trou 34 définit le passage de section variable pour le liquide à pulvériser.

Dans la variante de la fig. 11, l'élément en matière souple et compressible, se logeant par exemple dans une douille-buse du genre de celle de la première forme d'exécution, est constitué par un coussin en feutre 36, formé de fibres de matière élastique, qui laisse passer plus ou moins de liquide selon qu'il est fortement comprimé ou non.

Dans la variante des fig. 12 à 14, l'élément en matière souple et compressible, désigné par 37, est constitué par une pièce tronconique percée d'un trou central 38 et qui, au repos, a la forme, en section longitudinale, apparaissant à la fig. 12.

Lorsque cette pièce est engagée dans une pièce tubulaire formant monture, telle la pièce indiquée en 39 aux fig. 13 et 14, dont le diamètre intérieur est légèrement inférieur au diamètre de la plus grande des deux faces axiales de la pièce 37, celle-ci subit une contrainte qui la déforme, comme indiqué à la fig. 13. Cette première déformation réduit déjà le diamètre du trou central 38 par rapport à ce qu'il est lorsque la pièce 37 est au repos (fig. 12).

La pression qu'exerce le gaz propulseur du liquide sur la face postérieure de la pièce 37, indiquée par les flèches 40 de la fig. 14, déforme la pièce 37 et réduit encore le diamètre de son trou central 38.

Enfin, dans la variante de la fig. 15, la pièce en matière souple et compressible, désignée par 41, est engagée dans une monture en forme de douille 42. Cette monture présente un collet central annulaire 42a dans lequel s'engage un manchon tubulaire 41a de la pièce 41. Cette dernière est percée d'un trou central 43 situé en regard d'un trou central 44 que présente le fond 42b de la monture. La face extérieure 45 du manchon 41a est troncoisique, alors que la face intérieure du collet 42a présente un siège 46, tronconique également.

Lorsque le gaz propulseur exerce une pression, indiquée par les flèches 47, sur la face dorsale, désignée par 48, de la pièce 41, celle-ci se déforme en raison de son élasticité, ce qui amène son manchon central 41a à s'engager plus profondément dans le collet 42a de la monture 42. Il en résulte que, la face externe 45 du manchon 41a coopérant avec le siège 46 du collet 42a, le manchon est resserré, ce qu'autorise la compressibilité de la matière dont est faite la pièce 41. Ce resserrement du manchon 41a provoque une constriction du trou central 43 de la pièce 41, diminuant sa section utile.

Il est à remarquer que la pièce 41 présente une saillie annulaire 41b, coaxiale à son manchon central 41a, qui, lorsque la pièce 41 se déforme sous l'effet de la pression du gaz propulseur, vient buter contre le fond 42b de la monture 42, limitant ainsi la pénétration du manchon 41a dans le collet 42a de la monture. Cela évite qu'en tout début d'emploi du pulvérisateur d'aérosol, lorsque la pression du gaz propulseur est maximum, la surface utile du trou central 43 par lequel passe le produit à pulvériser ne diminue exagérément, ce qui pourrait conduire à un blocage de la sortie du produit.

D'une façon générale, les éléments en matière élastiquement compressible pourront ne pas être réalisés en caoutchouc, comme indiqué pour la première forme d'exécution, mais en différentes autres matières, permettant notamment de les obtenir par moulage, telles que le caoutchouc silicone Wacker RTV (Marque déposée) ou le RHODORSIL (Marque déposée) de la maison RHONE-POULENC, ou autres. Le matériau choisi devra présenter une bonne compressibilité et être neutre vis-à-vis du liquide à pulvériser.

**Revendications**

1. Tête de pulvérisation d'un liquide soumis à la pression d'un gaz propulseur comprimé, caractérisée par le fait qu'elle comprend, disposé sur le chemin que parcourt le liquide, à l'amont d'une buse de pulvérisation que comprend ladite tête, un dispositif de réglage du débit du liquide, comprenant au moins un élément en matière élastiquement compressible ménageant au moins un pasage pour le liquide, l'agencement étant tel que, en raison de ladite compressibilité, plus la pression à laquelle est soumis ledit élément est élevée, plus la section utile dudit passage est restreinte, alors que, réciproquement, plus cette pression baisse, plus la section utile du passage augmente, de telle manière que le débit du liquide soit sensiblement constant dans les limites des variations de la pression du gaz propulseur au cours de l'utilisation de l'appareil de pulvérisation équipé de ladite tête.

2. Tête de pulvérisation suivant la revendication 1, caractérisée par le fait que ledit élément en matière élastiquement compressible est réalisé en caoutchouc.

3. Tête de pulvérisation suivant la revendication 1, caractérisée par le fait que ledit élément en matière élastiquement compressible est percé d'un trou traversant constituant le passage à section variable pour le liquide.

4. Tête de pulvérisation suivant la revendication 1, caractérisée par le fait que ledit élément en matière élastiquement compressible est percé de plusieurs trous traversants parallèles les uns aux autres constituant des passages à section variable pour le liquide.

5. Tête de pulvérisation suivant la revendication 1, caractérisée par le fait que ledit élément en matière élastiquement compressible est constitué par une pièce cylindrique dans la paroi latérale de laquelle est ménagée au moins une gorge hélicoïdale ouvrant sur les deux faces axiales de ladite pièce et formant, avec une monture dans laquelle est logée ladite pièce cylindrique, le passage à section variable pour le liquide.

6. Tête de pulvérisation suivant la revendication 1, caractérisée par le fait que ledit élément en matière élastiquement compressible est constitué par une pièce annulaire traversée par un noyau cylindrique dont la face latérale présente des gorges longitudinales parallèles à son axe et qui forment, avec ladite pièce annulaire, des passages à section variable pour le liquide.

7. Tête de pulvérisation suivant la revendication 1, caractérisée par le fait que ledit élément en matière élastiquement compressible est logé dans une douille dont le fond est percé d'au moins une ouverture.

8. Tête de pulvérisation suivant la revendication 1, caractérisée par le fait que ledit élément en matière élastiquement compressible est constitué par une pièce sphérique engagée librement dans une douille dont le fond est percé d'au moins une ouverture, l'espace annulaire subsistant entre ladite sphère et ladite douille formant le passage à section variable pour le liquide.

9. Tête de pulvérisation suivant la revendication 1, caractérisée par le fait que ledit élément en matière élastiquement compressible est constitué par une pièce sphérique percée d'un trou diamétral, engagée sur un noyau ménageant, entre lui et la paroi dudit trou, le passage à section variable pour le liquide.

10. Tête de pulvérisation suivant la revendication 1, caractérisée par le fait que l'élément en matière élastiquement compressible est constitué par un tampon de feutre.

11. Tête de pulvérisation suivant la revendication 1, caractérisée par le fait que le dispositif de réglage du débit de liquide comprend plusieurs éléments sphériques en matière élastiquement compressible, disposés en vrac dans une monture, les interstices entre lesdites sphères constituant des passages à section variable pour le liquide.

12. Tête de pulvérisation suivant la revendication 1, caractérisée par le fait que ledit élément en matière élastiquement compressible présente une saillie circulaire percée d'au moins un passage pour le liquide, cette saillie étant située en regard d'une ouverture que présente une monture supportant ledit élément, l'une des parties au moins --saillie et ouverture-- présentant une surface, respectivement une paroi tronconique coopérant avec l'autre partie, le tout de manière que lors des déformations que subit ledit élément sous l'effet de la pression du gaz propulseur, ladite saillie pénètre plus ou moins profondément dans ladite ouverture, la paroi de celle-ci, agissant sur la saillie, produisant un resserrement de cette dernière et, partant, une constriction du passage pour le liquide.

13. Tête de pulvérisation suivant la revendication 12, caractérisée par le fait que ladite ouverture de la monture est ménagée dans un collet que présente cette dernière, la paroi intérieure de ladite ouverture étant tronconique pour former un siège avec lequel coopère la saillie de l'élément en matière élastiquement compressible, dont la face extérieure est également tronconique.

14. Tête de pulvérisation suivant la revendication 1, caractérisée par le fait que ledit élément en matière élastiquement compressible est porté par une monture, des moyens de butée étant ménagés sur au moins une des parties --monture et ledit élément-- de manière que les déformations dudit élément sous l'effet de la pression du gaz propulseur soient limitées par lesdits moyens de butée et que la réduction du passage pour le liquide soit ainsi limitée également, quelle que soit la valeur supérieure de ladite pression.

FIG. 1

FIG. 2

FIG. 3

FIG. 4

FIG. 5

FIG. 6

FIG. 7

FIG. 8

FIG. 9

EP 0 518 301 A2

FIG. 10

FIG. 11

FIG. 12

FIG. 13

FIG. 14

FIG. 15

8